# FASCICULE DE BREVET EUROPEEN

(11) **EP 1 012 703 B1**
(45) Date de publication et mention de la délivrance du brevet: **24.10.2001**
(21) Numéro de dépôt: 97900619.4
(22) Date de dépôt: 09.01.1997
(51) Int. Cl.: G06F 7/72, G06F 7/52

(54) **COPROCESSEUR D'ARITHMETIQUE MODULAIRE COMPORTANT UN CIRCUIT DE DIVISION ENTIERE**
MODULO-ARITHMETISCHER KOPROZESSOR MIT EINER SCHALTUNG FÜR DIE DIVISION GANZER ZAHLEN
MODULAR ARITHMETIC COPROCESSOR COMPRISING AN INTEGER DIVISION CIRCUIT

(30) Priorité: 12.01.1996 FR 9600640
(43) Date de publication de la demande: 28.06.2000
(73) Titulaire: STMicroelectronics S.A., 94250 Gentilly (FR)
(72) Inventeur: MONIER, Guy "La Pinsonnette", F-13340 Rognac (FR)
(74) Mandataire: Ballot, Paul Denis Jacques
(86) Numéro de dépôt international: FR9700035
(87) Numéro de publication internationale: WO9725668

(56) Documents cités:
- EP-A- 0 502 782
- EP-A- 0 566 498
- EP-A- 0 601 907
- GB-A- 892 112
- US-A- 3 816 733
- K. HWANG: "Computer Arithmetic" 1979 , J. WILEY & SONS , NEW YORK, NY, USA XP002022160 voir page 218 - page 221
- R. RICHARDS: "ARITHMETIC OPERATIONS IN DIGITAL COMPUTERS" 1955 , VAN NOSTRAND , NEW YORK, NY, USA XP002022159 pages 152-155, 165-174 voir page 170, dernière ligne - page 172, ligne 16 voir page 173, dernier alinéa - page 174, alinéa 1
- PROCEEDINGS OF THE FALL JOINT COMPUTER CONFERENCE, SAN FRANCISCO, OCTOBER, 1964, vol. 26, 1964, AMERICAN FEDERATION OF INFORMATION PROCESSING SOCIETIES, BALTIMORE, SPARTAN BOOKS.; US , pages 187-203, XP002022162 K. MURATA ET AL.: "VERY HIGH SPEED SERIAL AND SERIAL-PARALLEL COMPUTERS HITAC 5020 AND 5020E"

## Description

L'invention concerne un coprocesseur d'arithmétique modulaire comportant un circuit de division entière. Les coprocesseurs d'arithmétique modulaire sont utilisés dans des circuits de cryptage et/ou de décryptage. L'utilisation de ces coprocesseurs permet d'accélérer de manière considérable les opérations de cryptage et/ou de décryptage utilisant la méthode de Montgomery. De tels systèmes sont très utilisés sur des cartes à puces utilisant notamment le code RSA.

Le code RSA est un codage mathématique où un message binaire M codé sur n bits est traité comme un nombre entier de n bits. Le cryptage et le décryptage sont réalisés par des exponentiations modulaires:
- cryptage: M' = M^{e} mod N,
- décryptage: M = M'^{d} mod N.

M' est le message crypté, codé sur n bits. N est un entier codé sur n bits, tel que N = p * q, p et q étant deux nombres premiers. Les exposants e et d sont deux entiers tels que (e * d) mod Φ(N) = 1, avec Φ(N) = (p-1) * (q - 1). Un tel code dispose donc de deux clefs, l'une de cryptage appelée clef publique (e et N) et l'autre de décryptage appelée clef secrète (d et N).

Pour trouver la clef secrète à partir de la clef publique, il suffit de réaliser l'opération suivante: d = (1 + K * Φ(N)) / e, K étant un coefficient entier non nul. La sécurité d'un tel code tient en fait dans la complexité des opérations à réaliser. Pour trouver la clef secrète, il faut effectuer la factorisation de N en nombre premier, ce qui demande un temps d'autant plus élevé que les nombres p et q sont grands (en pratique p et q sont codés sur quelques centaines de bits). En effet, il faut tester successivement la divisibilité de N par tous les nombres entiers codé sur 2 à n / 2 bits.

Chercher la clef secrète à partir de la clef publique est tout à fait possible à condition de passer plusieurs centaines d'années. Néanmoins, certaines utilisations de codes RSA peuvent nécessiter des changements de clefs qui font appels à un calcul de clefs. De tels calculs font appel à des divisions sur des nombres de grandes dimensions.

Dans les cartes à puces, les circuits de cryptage font appel à une architecture de type microprocesseur-coprocesseur. Le microprocesseur est d'un type classique 8 ou 16 bits. Le coprocesseur est un coprocesseur d'arithmétique modulaire, par exemple du même type que celui décrit dans la demande de brevet européen référencé EP-A-0 601 907 (nommé par la suite D1). Le coprocesseur est illustré figure 1 (cette figure correspondant à la figure 2 de la demande.de brevet européen citée).

Pour réaliser des divisions, le coprocesseur n'est d'aucune utilité, donc la division s'effectuera dans le microprocesseur. Le fait de réaliser la division dans le microprocesseur demande un temps considérable car celui-ci n'est pas capable de traiter directement des données de grandes dimensions (par exemple 512 bits). De plus le programme qui permet de réaliser cette division occupera une place en mémoire considérable (code associé au programme) et utilise de l'espace mémoire de travail pour réaliser ses calculs. Pour une carte à puce il est donc très difficile de pouvoir recalculer des clefs, à partir de clefs publiques (e et N) différentes.

L'invention propose d'ajouter dans un coprocesseur d'arithmétique modulaire un circuit de calcul spécialement étudié pour effectuer des divisions sur des nombre de grande taille. Le circuit de division ne devant pas utiliser beaucoup de place supplémentaire, ce circuit utilise des ressources communes aux opérations modulaires effectuées selon la méthode de Montgomery qui sont déjà présentes dans un coprocesseur d'arithmétique modulaire. Ainsi le fait de réaliser un circuit de calcul spécifique à la division sur le coprocesseur d'arithmétique modulaire permet à une carte à puce de faire un calcul de clefs sans avoir une augmentation notoire de la taille du circuit intégré. L'invention propose également un procédé de réalisation d'une division utilisant un tel circuit.

L'invention a pour objet un procédé, de réalisation d'une division entière d'un premier nombre tel que défini dans la revendication 1, codé sur n' + n" bits, par un deuxième nombre, codé sur n bits, à l'aide d'un coprocesseur d'arithmétique modulaire destiné à effectuer des calculs selon la méthode de Montgomery comportant un premier, un deuxième, un troisième et un quatrième registres à décalage de n bits, un premier et un deuxième circuits de soustraction série, un circuit de test, caractérisé en ce que ledit procédé comporte les étapes suivantes:
E1: chargement dans les premier et deuxième registres du premier nombre, initialisation du troisième registre avec des zéros, chargement dans le quatrième registre du deuxième nombre, initialisation à zéro au circuit de test,
E2: décalage de un bits des troisième et quatrième registres, le troisième registre récupérant en bit de poids fort le bit de poids fort du deuxième registre, le quatrième registre ayant sa sortie reliée à son entrée, soustraction dans le deuxième circuit de soustraction du bit de poids fort du deuxième registre avec le bit de poids faible du quatrième registre, le premier circuit de soustraction effectuant une soustraction du bit de poids faible du troisième registre avec zéro,
E3: décalage de n - 1 bits des troisième et quatrième registres, la sortie du quatrième registre étant reliée à son entrée, l'entrée du troisième registre étant reliée à la sortie du premier circuit de soustraction, soustraction des n - 1 bits sortant du troisième registre avec zéro dans le premier circuit de soustraction, soustraction de la sortie du résultat sortant du premier circuit de soustraction avec les bits du quatrième registre,
E4: mémorisation de la dernière retenue du deuxième circuit de soustraction dans le circuit de test et production à la sortie de ce circuit de test d'une donnée binaire valant le complément de la retenue mémorisée,
E5: décalage de un bit des premier et deuxième registres, le bit de poids fort du premier registre étant chargé en bit de poids faible du deuxième registre, la donnée binaire mémorisée dans le circuit de test étant chargée en bit de poids faible dans le premier registre,
E6: initialisation des premier et deuxième circuits de soustraction,
E7: répétition 2 * n - 1 fois des étapes E2 à E6, le premier circuit de soustraction effectuant une soustraction du contenu du troisième registre avec zéro si la retenue précédemment mémorisée était égale à un, le premier circuit de soustraction effectuant une soustraction du contenu du troisième registre avec le contenu du quatrième registre si la retenue précédemment mémorisée était égale à zéro.

L'invention a également pour objet un coprocesseur d'arithmétique modulaire destiné à effectuer des calculs selon la méthode de Montgomery comportant un circuit de division tel que defini dans la revenditication 3, circuit de division comporte un circuit de test ayant une entrée et une sortie pour effectuer des divisions entières par des nombres différents d'une puissance de deux.

L'invention définit plus particulièrement un circuit de division entière qui calcule la division d'une donnée binaire A codée sur 2 * n bits par une données binaire B codée sur n' + n" bits, A, B, n, n' et n" étant des entiers non nuls, le circuit comportant: un premier registre de n' bits et un deuxième registre de n" bits pour contenir la donnée binaire A et le résultat de la division, un troisième registre de n bits pour contenir un résultat intermédiaire, un quatrième registre de n bits pour contenir la donnée binaire B.

Le circuit de division étant portable dans plusieurs coprocesseurs, l'invention a également pour objet un coprocesseur d'arithmétique comportant un circuit de division entière qui calcule la division d'une donnée binaire A codée sur n' + n" bits par une données binaire B codée sur n bits, A, B, n, n' et n" étant des entiers non nuls, caractérisé en ce que le circuit de division entière comporte: un premier registre de n' bits et un deuxième registre de n" bits pour contenir la donnée binaire A et le résultat de la division, un troisième registre de n bits pour contenir un résultat intermédiaire, un quatrième registre de n bits pour contenir la donnée binaire B deux circuits de soustraction en cascade ayant chacun une première et une deuxième entrée séries, et une sortie série, un circuit de test ayant une entrée et une sortie.

D'autres modes de réalisatisation sont spécifiés dans les revendications dépendantes alternantes.

L'invention sera mieux comprise, et d'autres caractéristiques et avantages apparaîtront dans la description ci-après d'un mode de réalisation de l'invention, donné à titre indicatif et nullement limitatif, lue conjointement aux dessins annexés, parmi lesquels:
la figure 1 représente schématiquement un coprocesseur d'arithmétique modulaire utilisant la méthode de Montgomery, selon l'art antérieur,
la figure 2 représente schématiquement un circuit de division, selon l'invention,
la figure 3 représente schématiquement un coprocesseur d'arithmétique modulaire utilisant la méthode de Montgomery qui possède un circuit de division, selon l'invention.

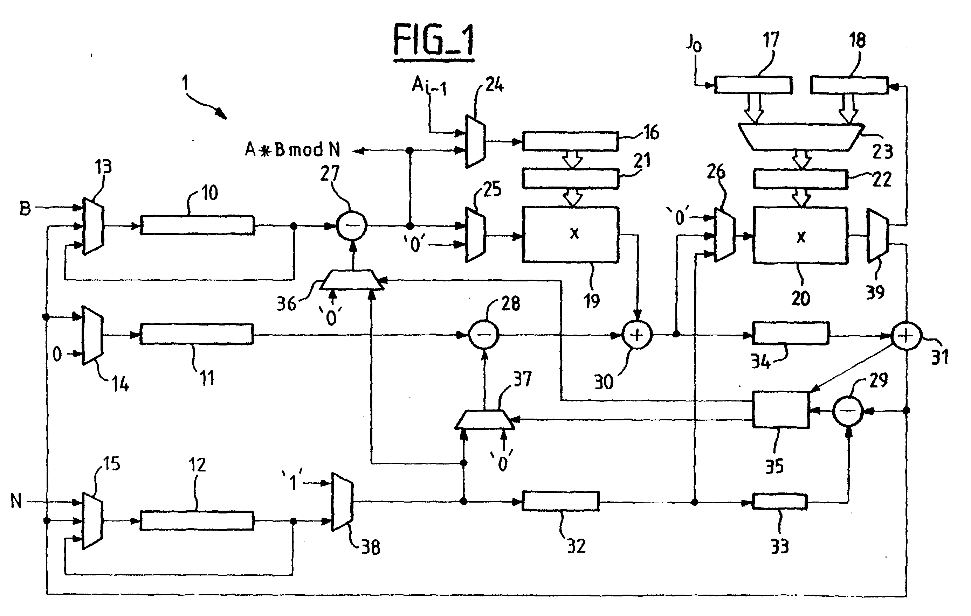

La figure 1 représente un coprocesseur 1 d'arithmétique modulaire de traitement d'opérations modulaires utilisant la méthode de Montgomery.

Il comprend :
- trois registres à décalage 10, 11 et 12 à entrée et sortie série. Ces registres comportent chacun un même nombre n de cellules, avec n = m * k. Ces registres pourront être subdivisables, par exemple en registres de n/2 cellules, et en registres de k bits pour les registres 10 et 12.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun k cellules. Les registres 16, 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de k cellules. L'entrée parallèle du circuit de multiplication 20 est reliée à l'une des sorties des registres 17 ou 18, par le biais d'une bascule de mémorisation 22 de k cellules. Cette bascule 22 est elle-même reliée à l'une des sorties des registres 17 et 18, par le biais d'un multiplexeur à deux entrées parallèles et une sortie parallèle.
- des multiplexeurs 24, 25, 37, 26, 36 et 38.
- un démultiplexeur 39.
- des circuits de soustraction série 27, 28 et 29.
- des circuits d'addition série 30 et 31.
- des circuits de retardement 32, 33 et 34 pour retarder de k temps de cycle la propagation de données binaires.
- un circuit 35 de stockage de résultat de comparaison.

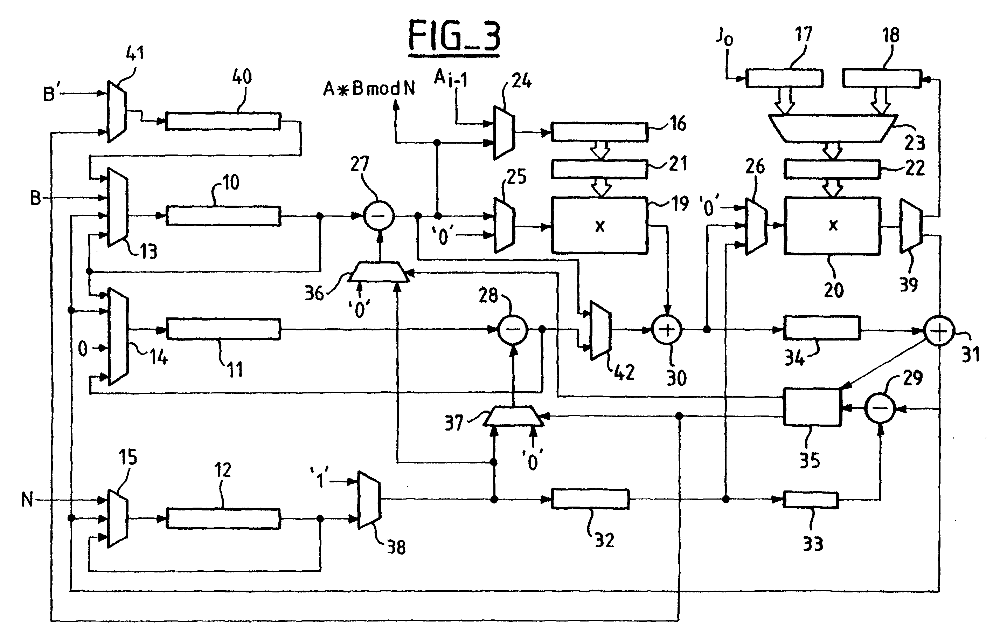

Pour plus de détails, on pourra se reporter au document D1 et en particulier à la figure 3 de ce document, et aux extraits de la description s'y rapportant : page 15, ligne 54 à page 16, ligne 13, et page 17, ligne 50 à page 18, ligne 55.

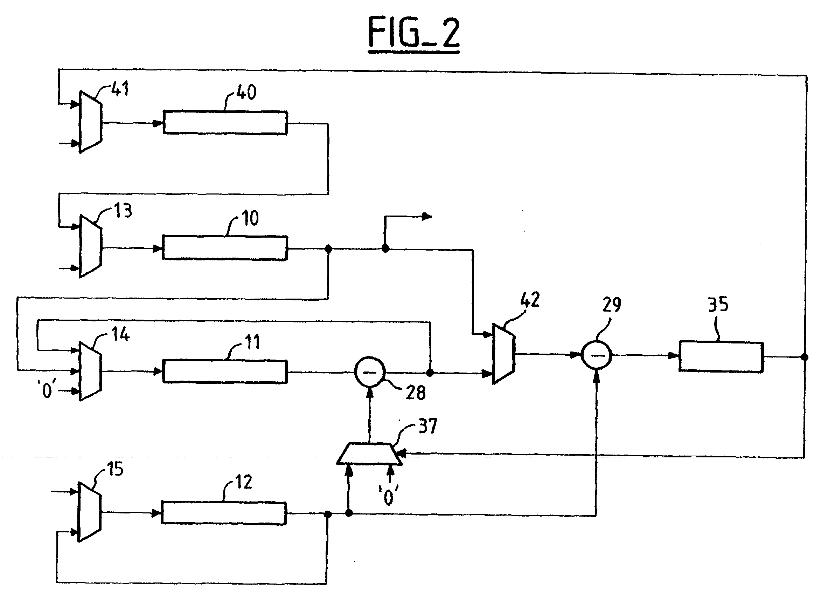

L'invention consiste à rajouter un circuit de division dans ce coprocesseur 1. Cependant afin de ne pas augmenter la taille de ce coprocesseur de manière trop importante, le circuit de division comporte des éléments déjà présents dans ce coprocesseur. Ainsi le circuit de division représenté sur la figure 2 comporte:
- quatre registres 10, 11, 12 et 40 à décalage de n bits, dans notre exemple de réalisation, ayant chacun une entrée et une sortie série,
- six multiplexeurs 13, 14, 15, 37, 41 et 42, les sorties des multiplexeurs 13, 14, 15 et 41 étant connectées respectivement aux entrées des registres 10, 11, 12 et 40, la sortie du multiplexeur 37 étant connectée à la deuxième entrée du circuit de soustraction 28, et la sortie du multiplexeur 42 étant connectée à la première entrée du circuit de soustraction 29, ces multiplexeurs servant à établir différentes connexions nécessaire au fonctionnement du circuit,
- deux circuits de soustraction 28 et 29, ayant chacun deux entrées et une sortie série, ces circuits effectuant de manière synchrone des soustraction bit à bit, le document D1 montre sur sa figure 8 un mode de réalisation de ces circuits de soustraction 28 et 29,
- un circuit de test 35 ayant une entrée et une sortie (en fait seul une entrée et une sortie sont utiles pour le circuit de division, bien que ce circuit 35 comporte deux entrées et deux sorties).

Pour le circuit de division, plusieurs connexions sont réalisées, certaines peuvent être câblées directement et d'autres par l'intermédiaire des multiplexeurs 13, 14, 15, 37, 41 et 42. Néanmoins certaines connexions peuvent être faites par l'intermédiaire d'éléments du coprocesseur 1 qui sont rendus transparents (c'est à dire inopérant) et qui ne sont pas représentés sur la figure 2.

Ainsi on a:
- la sortie du registre 40 connectée à l'entrée du registre 10 par l'intermédiaire du multiplexeur 13,
- la sortie du registre 10 connectée à l'entrée du registre 11 par l'intermédiaire du multiplexeur 14,
- la sortie du registre 10 connectée à l'entrée du circuit de soustraction 29 par l'intermédiaire du multiplexeur 42,
- la sortie du circuit de soustraction 28 connectée à l'entrée du registre 11 par l'intermédiaire du multiplexeur 14,
- la sortie du registre 11 connectée à la première entrée du circuit de soustraction 28,
- la sortie du registre 12 connectée à son entrée par l'intermédiaire du multiplexeur 15,
- la sortie du registre 12 connectée à la deuxième entrée du circuit de soustraction 28 par l'intermédiaire du multiplexeur 37,
- la sortie du registre 12 connectée à la deuxième entrée du circuit de soustraction 29,
- la sortie du circuit de soustraction 28 connectée à la première entrée du circuit de soustraction 29 par l'intermédiaire du multiplexeur 42,
- la sortie du circuit de soustraction 29 connectée à l'entrée du circuit de test 35,
- la sortie du circuit de test 35 connectée à l'entrée du registre 40 par l'intermédiaire du multiplexeur 41,
- la sortie du circuit de test 35 connectée à une entrée de sélection du multiplexeur 37,
- la deuxième entrée du circuit de soustraction 28 connectée à un zéro logique par l'intermédiaire du multiplexeur 37,
- l'entrée du registre 11 connectée à un zéro logique par l'intermédiaire du multiplexeur 14,
- l'entrée du registre 12 connectée à une première borne d'entrée par l'intermédiaire du multiplexeur 15,
- l'entrée du registre 12 connectée à une deuxième borne d'entrée par l'intermédiaire du multiplexeur 13,
- l'entrée du registre 40 connectée à une troisième borne d'entrée par l'intermédiaire du multiplexeur 41, et
- la sortie du registre 10 connectée à une borne de sortie.

Avec le dispositif décrit précédemment, il est possible de réaliser une division entière d'un premier nombre codé sur 2 * n bits par un deuxième nombre codé sur n bits, le résultat étant codé sur 2 * n bits. Pour cela, on effectue les étapes suivantes:
E1: - chargement dans les registres 40 et 10 du premier nombre, le registre 40 contenant les n bits de poids faible de ce premier nombre et le registre 10 contenant les n bits de poids fort de ce premier nombre, chacun de ces registres 40 et 10 ayant son bit de poids le plus fort vers sa sortie et son bit de poids le plus faible vers son entrée,
   - initialisation du registre 11 avec des zéros, ce qui revient à charger des zéros dans ce registre 11,
   - chargement dans le registre 12 du deuxième nombre, le bit de poids le plus faible étant près de la sortie et le bit de poids le plus fort étant près de son entrée,
   - initialisation du circuit de test, ceci afin d'effectuer la connexion de la deuxième entrée du circuit de soustraction 28 avec un zéro logique,
   - initialisation à zéro des circuits de soustraction 28 et 29,
E2: décalage de un bit des registres 11 et 12, le registre 11 récupérant en bit de poids fort le bit de poids fort du registre 10, le registre 12 ayant sa sortie reliée à son entrée, soustraction dans le circuit de soustraction 29 du bit de poids fort du registre 10 avec le bit de poids faible du registre 12, le circuit de soustraction 28 effectuant une soustraction du bit de poids faible du registre 11 avec zéro,
E3: décalage de n - 1 bits des registres 11 et 12, la sortie du registre 12 étant reliée à son entrée, l'entrée du registre 11 étant reliée à la sortie du circuit de soustraction 28, soustraction des n - 1 bits sortant du registre 11 avec zéro dans le circuit de soustraction 28, soustraction de la sortie du résultat sortant du circuit de soustraction 28 avec les bits du registre 12 dans le circuit de soustraction 29,
E4: mémorisation d'une donnée binaire valant le complément de la dernière retenue du circuit de soustraction 29 dans le circuit de test 35 et production à la sortie de ce circuit de test 35 de la donnée binaire,
E5: décalage de un bit des registres 40 et 10, le bit de poids fort du registre 40 étant chargé en bit de poids faible du registre 10, la donnée binaire mémorisée dans le circuit de test 35 étant chargée en bit de poids faible dans le registre 40,
E6: initialisation des circuits de soustraction 28 et 29,
E7: répétition 2 * n - 1 fois des étapes E2 à E6, le circuit de soustraction 28 effectuant une soustraction du contenu du registre 11 avec zéro si la donnée binaire mémorisée est égale à zéro, le circuit de soustraction 28 effectuant une soustraction du contenu du registre 11 avec le contenu du registre 12 si la donnée binaire mémorisée est égale à un,
E8: récupération du résultat sur la borne de sortie par décalage de 2 * n bits des registres 40 et 10, la sortie du registre 40 étant reliée à l'entrée du registre 10, le bit de poids fort sortant en premier, le reste de la division étant présent dans le registre 11.

Quelques commentaires sont à faire sur certaines étapes pour mieux comprendre ce qui est réalisé. L'étape E1 correspond aux chargements des données et à l'initialisation. Le chargement du premier nombre peut s'effectuer de deux manières différentes, soit sur deux bornes d'entrée de manière simultanée dans les registres 40 et 10, soit par la troisième borne d'entrée, le registre 10 étant chargé par l'intermédiaire du registre 40. Il peut être également inclus dans cette étape différentes initialisations d'éléments du coprocesseur 1 qui demande à être rendu transparent pour le bon fonctionnement du circuit de division.

Les étapes E2, E3 et E4 reviennent à:
- soustraire dans le circuit de soustraction 28 d'un résultat intermédiaire contenu dans le registre 11 le deuxième nombre contenu dans le registre 12 si le résultat intermédiaire et supérieur au deuxième nombre,
- multiplier par deux le résultat de la soustraction effectuée dans le circuit de soustraction 28 et y additionner le bit de poids fort du registre 10, puis de stocker dans le registre 11 ce nouveau résultat intermédiaire,
- comparer le nouveau résultat intermédiaire pendant sa production avec le deuxième nombre par soustraction dans le circuit 29, et
- mémorisation d'une donnée binaire représentative de la comparaison qui correspond au complément de la dernière retenue issu de la soustraction du circuit de soustraction 29, cette donnée binaire valant "un" si le nouveau résultat intermédiaire est supérieur ou égal au deuxième nombre ou valant zéro si la nouveau résultat intermédiaire est inférieur au deuxième nombre.

L'étape E4 peut être confondue avec le dernier décalage de l'étape E3. Cela demande quelques modification du circuit de soustraction 29 que l'homme de métier sait faire. Les modifications visant à sortir la retenue par anticipation.

L'étape E5 permet de mémoriser la donnée binaire comme étant un bit du résultat de la division et décale tous les bits du premier nombre changeant ainsi le bit de poids fort à considérer. Cette étape peut être effectuer pendant l'une des étapes E2, E3 ou E4, dans ce cas, il faudra rajouter une étape E5 après l'étape E7.

L'étape E6 sert à éliminer les retenues des soustractions précédentes, elle peut être effectuée de manière asynchrone immédiatement après la mémorisation de la donnée binaire.

Un bilan de temps utilisé indique dans les cas les plus favorables que:
- l'étape E1 utilise n cycles d'horloge,
- l'étape E2 utilise 1 cycle d'horloge,
- l'étape E3 utilise n - 1 cycles d'horloge,
- l'étape E4 utilise 1 cycle d'horloge,
- l'étapes E5 utilise 1 cycle d'horloge,
- l'étape E6 peut utiliser 1 cycle d'horloge,
- l'étape E7 utilise 2 * n - 1 fois les étapes E2 à E5, soit (2 * n -1) * (n + 3) cycles d'horloge,
- l'étape E8 utilise 2 * n cycles d'horloge.

Cela nous amène à un total de 2 * n * (n + 4) + n cycles d'horloge. 3 * n cycles sont nécessaires aux échanges de données entre le coprocesseur et une mémoire. On sait que les temps d'accès des mémoires sont parfois longs, si on utilise une même fréquence d'horloge pour le chargement et le traitement, celle-ci devra donc dépendre du temps d'accès des mémoires. L'invention propose d'utiliser deux fréquences d'horloge, une pour le chargement et une pour le traitement afin de palier à ce problème.

D'autres modifications qui découlent de la simultanéïté de certaines étapes permettent de diminuer le nombre total de cycles jusqu'à un maximum de 6 * n cycles d'horloge.

On remarque sur le bilan des temps que la taille de n bits des registres influence le nombre de cycles d'horloge nécessaires à la réalisation de la division. Cette influence sera minimisée dans la mesure où les premier et deuxième nombres ont une taille réelle proche de la taille maximum des registres. Pour que cela soit vrai dans un nombre de cas important, il est possible d'utiliser des registres de taille variable. L'homme de métier pourra par exemple s'inspirer des registres montrés dans le document D1 sur sa figure 3, en utilisant un nombre de division de chaque registre plus important.

Ainsi on peut avoir un registre 40 de taille n', un registre 10 de taille n", et des registres 11 et 12 de taille n⁽³⁾. La modification du procédé se limite dans l'étape E3 faire un décalage de n⁽³⁾ - 1 bits au lieu de n - 1 bits, et dans l'étape E7 à répéter les étapes n' + n" fois au lieu de 2 * n fois.

Sur la figure 3, le circuit de division de la figure 2 a été ajouté au coprocesseur 1 de la figure 1. La figure 3 ne montre qu'un exemple d'intégration parmi plusieurs possibilités.

Par rapport au coprocesseur 1 de la figure 1, il 1 a été rajouté le registre 40 et les multiplexeur 41 et 42. De plus certains éléments déjà présents ont été modifiés. Ainsi le multiplexeur 13 a une entrée supplémentaire connectée à la sortie du registre 40. Le multiplexeur 14 a deux entrées supplémentaires, l'une connectée à la sortie du registre 10, et l'autre connectée à la sortie du circuit de soustraction 28. D'autres éléments sont modifiés de manière non visible sur la figure 3. Le circuit de test 35 est prévu pour détecter des retenues, la sortie qui est connectée à l'entrée de sélection du multiplexeur 37 doit être muni d'un inverseur pour vérifier la fonctionnalité du circuit de division, cela entraîne également une inversion des entrées du multiplexeur 37. Les circuits de retardement 32, 33 et 34 ne sont d'aucune utilité pour la division, ils sont modifiés pour provoquer aussi bien des retards nuls que des renards nécessaires au déroulement d'opérations modulaires. On pourra par exemple rajouter des multiplexeurs sur ces circuits de retard 32, 33 et 34 afin de les shunter.

Tel que le circuit est modifié, certains éléments du coprocesseur doivent être rendu transparent. Ainsi pendant le déroulement d'une division, les multiplexeurs 25, 26 et 36 doivent effectuer une connexion entre leurs sorties et leurs entrées reliées à des zéros logiques. Le multiplexeur 38 doit effectuer une connexion entre sa sortie et la sortie du registre 12.

Des modifications du déroulement de la division sont à prévoir. Les additionneurs 30 et 31 rajoutent chacun un retard de un cycle d'horloge. Le circuit de soustraction 27 provoque un retard qui doit être compenser par une anticipation de un cycle d'horloge sur l'étape E2.

Pour éviter cette anticipation de un cycle de l'étape E2, il est possible de connecter l'entrée du multiplexeur 42 en amont de ce circuit de soustraction 27. Il est également possible de placer le multiplexeur 42 en aval de l'additionneur 30.

Pour éviter d'avoir une entrée du multiplexeur 14 connectée à la sortie du circuit de soustraction 28, on peut déplacer le multiplexeur 42 entre l'additionneur 31 et le circuit de soustraction 29. La connexion de la sortie du circuit de soustraction 28 avec l'entrée du registre 11 se faisant par l'intermédiaire du circuit d'addition 31 dont la sortie est déjà connectée à une entrée du multiplexeur 14. Avec une telle modification, il faudra retarder l'étape E2 de un ou deux cycles d'horloge suivant que la connexion entre le multiplexeur 42 et la sortie du registre 10 s'effectue en aval ou en amont du circuit de soustraction 27.

Une amélioration peut également être envisagée en modifiant les additionneurs 30 et 31 afin qu'ils ne provoquent pas de cycles de retard supplémentaires.

Ces quelques exemples de modifications possibles par rapport à la figure 3 permettront à l'homme de métier de réaliser l'invention telle que revendiquée suivant ses préférences. L'homme de métier pourra également utiliser d'autres possibilités d'intégration sans s'éloigner du cadre de l'invention, telle que revendiquée.

## Revendications

1. Procédé de réalisation d'une division entière d'un premier nombre, codé sur n' - n" bits, par un deuxième nombre, codé sur n bits, à l'aide d'un coprocesseur d'arithmétique modulaire destiné à effectuer des calculs selon la méthode de Montgomery comportant :
- un premier, un deuxième, un troisième et un quatrième registres (40, 10, 11 et 12) à décalage de n bits,
- un premier et un deuxième circuits de soustraction série (28 et 29),
- un circuit de test (35),
**caractérisé en ce que** ledit procédé comporte les étapes suivantes :
E1: chargement dans les premier et deuxième registres (40 et 10) du premier nombre, initialisation du troisième registre (11) avec des zéros, chargement dans le quatrième registre (12) du deuxième nombre, initialisation à zéro du circuit de test (35) et des circuits de soustraction (28 et 29).
E2: décalage de un bits des troisième et quatrième registres (11 et 12), le troisième registre (11) récupérant en bit de poids fort le bit de poids fort du deuxième registre (10), le quatrième registre (12) ayant sa sortie reliée à son entrée, soustraction dans le deuxième circuit de soustraction (29) du bit de poids fort du deuxième registre (10) avec le bit de poids faible du quatrième registre (12), le premier circuit de soustraction (28) effectuant une soustraction du bit de poids faible du troisième registre (11) avec zéro,
E3: décalage de n - 1 bits des troisième et quatrième registres (11 et 12), la sortie du quatrième registre (12) étant reliée à son entrée, l'entrée du troisième registre (11) étant reliée à la sortie du premier circuit de soustraction (28), soustraction des n - 1 bits sortant du troisième registre (11) avec zéro dans le premier circuit de soustraction (28), soustraction de la sortie du résultat sortant du premier circuit de soustraction (28) avec les bits du quatrième registre (12),
E4: mémorisation de la dernière retenue du deuxième circuit de soustraction (29) dans le circuit de test (35) et production à la sortie de ce circuit de test (35) d'une donnée binaire valant le complément de la retenue mémorisée,
E5: décalage de un bit des premier et deuxième registres (40 et 10), le bit de poids fort du premier registre (40) étant chargé en bit de poids faible du deuxième registre (10), la donnée binaire mémorisée dans le circuit de test (35) étant chargée en bit de poids faible dans le premier registre (40),
E6: initialisation des premier et deuxième circuits de soustraction (28 et 29),
E7: répétition 2 * n - 1 fois des étapes E2 à E6, le premier circuit de soustraction (28) effectuant une soustraction du contenu du troisième registre (11) avec zéro si la retenue précédemment mémorisée est égale à un, le premier circuit de soustraction (28) effectuant une soustraction du contenu du troisième registre (11) avec le contenu du quatrième registre (12) si la retenue précédemment mémorisée est égale à zéro.

2. Procédé selon la revendication 1, **caractérisé en ce que** des étapes se déroulent pendant d'autres étapes.

3. Coprocesseur d'arithmétique modulaire destiné à effectuer des calculs selon la méthode de Montgomery comportant un circuit de division adapté pour effectuer le procédé de division selon la revendication 1, le circuit de division comportant un circuit de test (35) ayant une entrée et une sortie pour effectuer des divisions entières par des nombres différents d'une puissance de deux, **caractérisé en ce que** le circuit de division entière calcule la division d'une donnée binaire A codée sur n' + n" bits par une données binaire B codée sur n bits, A, B, n, n' et n" étant des entiers non nuls,
et **en ce que** le circuit de division entière comporte:
- un premier registre (40) de n' bits et un deuxième registre. (10) de n" bits pour contenir la donnée binaire A et le résultat de la division,
- un troisième registre (11) de n bits pour contenir un résultat intermédiaire,
- un quatrième registre (12) de n bits pour contenir la donnée binaire B
- deux circuits de soustraction (28 et 29) en cascade ayant chacun une première et une deuxième entrée séries, et une sortie série.

4. Coprocesseur selon la revendication 3,
**caractérisé en ce que** les premier, deuxième, troisième et quatrième registres (4C, 10, 11 et 12) sont des registres à décalage, chacun ayant une entrée série et une sortie série.

5. Coprocesseur selon la revendication 4,
**caractérisé en ce que**:
- la sortie du troisième registre (11) est connectée à la première entrée du premier circuit de soustraction (28),
- la sortie du quatrième registre (12) est connectée à la deuxième entrée du deuxième circuit de soustraction (29),
- la sortie du deuxième circuit de soustraction (29) est connectée à l'entrée du circuit de test (35),
- la sortie du premier registre (40) est connectée à l'encrée du deuxième registre (10),
- la sortie du deuxième registre (10) est connectée à l'entrée du troisième registre (11),
- la sortie du deuxième registre (10) est connectée à la première entrée du deuxième circuit de soustraction (29),
- la sortie du premier circuit de soustraction (28) est connectée à l'entrée du quatrième registre (11),
- la sortie du quatrième registre (12) est connectée à son entrée,
- la sortie du quatrième registre (12) est connectée à la deuxième encrée du premier circuit de soustraction (28),
- la sortie du premier circuit de soustraction (28) est connectée à la première entrée du deuxième circuit de soustraction (29),
- la sortie du circuit de test (35) est connectée à l'entrée du premier registre (40).

6. Coprocesseur selon l'une des revendications 4 ou 5, **caractérisé en ce que**:
- la deuxième entrée du premier circuit de soustraction (28) est connectée à un zéro logique,
- l'entrée du premier registre (40) est connectée à une première borne d'entrée,
- l'entrée du deuxième registre (10) est connectée à une deuxième borne d'entrée,
- l'entrée du troisième registre (11) est connectée à un zéro logique,
- l'entrée du quatrième registre (12) est connectée à une troisième borne d'entrée,

7. Coprocesseur selon l'une des revendications 5 ou 6, **caractérisé en ce que**:
- l'entrée du premier registre (40) est connectée à une sortie d'un premier multiplexeur (41),
- l'entrée du deuxième registre (10) est connectée à une sortie d'un deuxième multiplexeur (13),
- l'entrée du troisième registre (11) est connectée à une sortie d'un troisième multiplexeur (14),
- l'entrée du quatrième registre (12) est connectée à une sortie d'un quatrième multiplexeur (15),
- la deuxième entrée du premier circuit de soustraction (28) est connectée à une sortie d'un cinquième multiplexeur (37),
- la première entrée du deuxième circuit de soustraction (29) est connectée à une sortie d'un sixième multiplexeur (42),
- une entrée de sélection du cinquième multiplexeur (37) est connectée à la sortie du circuit de test (35),
et **en ce que** lesdits multiplexeurs (13, 14, 15, 37, 41 et 42) assurent certaines des connexions.

8. Coprocesseur selon l'une des revendications 3 à 7, **caractérisé en ce que** les cellules des premier et deuxième registres (40 et 10) placées près de la sortie desdits premier et deuxième registres (40 et 10) et **en ce que** les cellules des troisième et quatrième registres (11 et 12) placées près de l'entrée desdits troisième et quatrième registres (11 et 12) reçoivent des bits de poids le plus fort des données qui y sont contenus.

9. Coprocesseur selon l'une des revendications 3 à 8, **caractérisé en ce que** les premier, deuxième, troisième et quatrième registres (40, 10, 11 et 12) sont de tailles variables.

10. Coprocesseur selon l'une des revendications 3 à 9, **caractérisé en ce que** les premier, deuxième, troisième et quatrième registres (40, 10, 11 et 12) ont une taille identique de n bits.

11. Coprocesseur selon l'une des revendications 3 à 10, **caractérisé en ce que** le circuit de test (35) comporte un élément de mémorisation destiné à mémoriser une retenue issue du deuxième circuit de soustraction (29) et **en ce que** la sortie du circuit de test (35) fournit une donnée correspondant à un complément de cette retenue.

12. Coprocesseur selon l'une des revendications 3 à 11, **caractérisé en ce que** le reste de la division est contenu dans le troisième registre (11).

## Patentansprüche

1. Verfahren zur Durchführung einer Division ganzer Zahlen von einer ersten Zahl, die mit n' + n" Bits codiert ist, durch eine zweite Zahl, die mit n Bits codiert ist, mit einem modulo-arithmetischen Koprozessor für das Verfahren nach Montgomery mit:
- einem ersten, einem zweiten, einem dritten und einem vierten Schieberegister (40, 10, 11 und 12) mit n Bits,
- einem ersten und einem zweiten seriellen Subtraktionsschaltkreis (28 und 29),
- einem Testschaltkreis (35),
**dadurch gekennzeichnet, daß**
das Verfahren die folgenden Schritte umfaßt:
E1: Laden der ersten Zahl in das erste und zweite Register (40 und 10), Initialisieren des dritten Registers (11) mit Nullen, Laden der zweiten Zahl in das vierte Register (12), Initialisieren des Testschaltkreises (35) und der Subtraktionsschaltkreise (28 und 29) auf Null,
E2: Verschieben des dritten und vierten Registers (11 und 12) um ein Bit, wobei das dritte Register (11) als Bit mit dem größten Gewicht das Bit mit dem größten Gewicht des zweiten Registers (10) lädt, das vierte Register (12) über seinen Ausgang mit seinem Eingang verbunden ist, Subtraktion in dem zweiten Subtraktionsschaltkreis (29) des Bits mit dem größten Gewicht aus dem zweiten Register (10) von dem Bit mit dem niedrigsten Gewicht aus dem vierten Register (12), wobei der erste Subtraktionsschaltkreis (28) eine Subtraktion des Bits mit niedrigstem Gewicht aus dem dritten Register (11) und Null durchführt,
E3: Verschieben des dritten und vierten Registers (11 und 12) um n - 1 Bits, wobei der Ausgang des vierten Registers (12) verbunden ist mit seinem Eingang, der Eingang des dritten Registers (11) verbunden ist mit dem Ausgang des ersten Subtraktionsschaltkreises (28), Subtraktion von n - 1 Bits am Ausgang des dritten Registers (11) und Null in dem ersten Subtraktions-schaltkreis (28), Subtraktion des Ergebnisses am Ausgang des ersten Subtraktionsschaltkreises (28) und der Bits des vierten Registers (12),
E4: Abspeichern des letzten Überlaufs des zweiten Subtraktionsschaltkreises (29) in dem Testschaltkreis (35) und Erzeugen am Ausgang dieses Testschaltkreises (35) eines binären Datenwertes, der dem Komplementärwert des abgespeicherten Überlaufs entspricht,
E5: Verschieben des ersten und zweiten Registers (40 und 10) um ein Bit, wobei das Bit mit dem größten Gewicht des ersten Registers (40) geladen wird mit dem Bit mit dem niedrigsten Gewicht aus dem zweiten Register (10), wobei der abgespeicherte binäre Datenwert in dem Testschaltkreis (35) mit dem Bit mit dem niedrigsten Gewicht in dem ersten Register (40) geladen wird,
E6: Initialisieren des ersten und zweiten Subtraktionsschaltkreises (28 und 29), E7: (2 · n - 1)-fache Wiederholung der Schritte E2 bis E6, wobei der erste Subtraktionsschaltkreis (28) eine Subtraktion des Inhalts des dritten Registers (11) und Null durchführt, wenn der abgespeicherte binäre Datenwert Eins ist, und der erste Subtraktionsschaltkreis (28) eine Subtraktion des Inhalts des dritten Registers (11) mit dem Inhalt des vierten Registers (12) durchführt, wenn der abgespeicherte binäre Datenwert Null ist.

2. Verfahren nach Anspruch 1, **dadurch gekennzeichnet, daß** Schritte während anderer Schritte durchgeführt werden.

3. modulo-arithmetischer Koprozessor für Berechnungen nach dem Verfahren von Montgomery mit einem Divisionsschaltkreis für das Divisionsverfahren nach Anspruch 1, wobei der Divisionsschaltkreis einen Testschaltkreis (35) mit einem Eingang und einem Ausgang für die Durchführung von Divisionen ganzer Zahlen durch andere Zahlen, die Zweierpotenzen sind, umfaßt, **dadurch gekennzeichnet, daß** der Divisionsschaltkreis für ganze Zahlen die Division eines Binärwertes A, der mit n' + n" Bits codiert ist, durch einen Binärwert B, der mit n Bits codiert ist, durchführt, wobei A, B, n, n' und n" ganze Zahlen ungleich Null sind, und
**da**ß der Schaltkreis für die Division ganzer Zahlen umfaßt:
- ein erstes Register (40) mit n' Bits und ein zweites Register (10) mit n" Bits für das Ablegen von dem Binärwert A und dem Ergebnis der Division,
- ein drittes Register (11) mit n Bits für das Ablegen eines Zwischenergebnisses,
- ein viertes Register (12) mit n Bits für das Ablegen des Binärwertes B,
- zwei kaskadierte Subtraktionsschaltkreise (28 und 29) jeweils mit einem ersten und einem zweiten seriellen Eingang und einem seriellen Ausgang.

4. Koprozessor nach Anspruch 3, **dadurch gekennzeichnet, daß** das erste, zweite, dritte und vierte Register (40, 10, 11 und 12) Schieberegister sind, wobei jedes einen seriellen Eingang und einen seriellen Ausgang aufweist.

5. Koprozessor nach Anspruch 4, **dadurch gekennzeichnet, daß**:
- der Ausgang des dritten Registers (11) mit dem ersten Eingang des ersten Subtraktionsschaltkreises (28) verbunden ist,
- der Ausgang des vierten Registers (12) mit dem zweiten Eingang des zweiten Subtraktionsschaltkreises (29) verbunden ist,
- der Ausgang des zweiten Subtraktionsschaltkreises (29) mit dem Eingang des Testschaltkreises (35) verbunden ist,
- der Ausgang des ersten Registers (40) mit dem Eingang des zweiten Registers (10) verbunden ist,
- der Ausgang des zweiten Registers (10) mit dem Eingang des dritten Registers (11) verbunden ist,
- der Ausgang des zweiten Registers (10) mit dem ersten Eingang des zweiten Subtraktionsschaltkreises (29) verbunden ist,
- der Ausgang des ersten Subtraktionsschaltkreises (28) mit dem Eingang des vierten Registers (11) verbunden ist,
- der Ausgang des vierten Registers (12) mit seinem Eingang verbunden ist,
- der Ausgang des vierten Registers (12) mit dem zweiten Eingang des ersten Subtraktionsschaltkreises (28) verbunden ist,
- der Ausgang des ersten Subtraktionsschaltkreises (28) mit dem ersten Eingang des zweiten Subtraktionsschaltkreises (29) verbunden ist,
- der Ausgang des Testschaltkreises (35) mit dem Eingang des ersten Registers (40) verbunden ist.

6. Koprozessor nach einem der Ansprüche 4 oder 5, **dadurch gekennzeichnet, daß**:
- der zweite Eingang des ersten Subtraktionsschaltkreises (28) mit einer logischen Null verbunden ist,
- der Eingang des ersten Registers (40) mit einem ersten Eingangsanschluß verbunden ist,
- der Eingang des zweiten Registers (10) mit einem zweiten Eingangsanschluß verbunden ist,
- der Eingang des dritten Registers (11) mit einer logischen Null verbunden ist,
- der Eingang des vierten Registers (12) mit einem dritten Eingangsanschluß verbunden ist.

7. Koprozessor nach Anspruch 5 oder 6, **dadurch gekennzeichnet, daß**:
- der Eingang des ersten Registers (40) mit einem Ausgang eines ersten Multiplexers (41) verbunden ist,
- der Eingang des zweiten Registers (10) mit einem Ausgang eines zweiten Multiplexers (13) verbunden ist,
- der Eingang des dritten Registers (11) mit einem Ausgang eins dritten Multiplexers (14) verbunden ist,
- der Eingang des vierten Registers (12) mit einem Ausgang eines vierten Multiplexers (15) verbunden ist,
- der zweite Eingang des ersten Subtraktionsschaltkreises (28) mit einem Ausgang eines fünften Multiplexers (37) verbunden ist,
- der erste Eingang des zweiten Subtraktionsschaltkreises (29) mit einem Ausgang eines sechsten Multiplexers (42) verbunden ist,
- ein Auswahleingang des fünften Multiplexers (37) mit dem Ausgang des Testschaltkreises (35) verbunden ist,
und daß die Multiplexer (13, 14, 15, 37, 41 und 42) bestimmte Verbindungen herstellen.

8. Koprozessor nach einem der Ansprüche 3 bis 7, **dadurch gekennzeichnet, daß** die Zellen des ersten und zweiten Registers (40 und 10), die am Ausgang des ersten und zweiten Registers (40 und 10) angeordnet sind, und die Zellen des dritten und vierten Registers (11 und 12), die am Eingang des dritten und vierten Registers (11 und 12) angeordnet sind, Bits mit dem höchsten Gewicht der Datenwerte, die darin enthalten sind, einlesen.

9. Koprozessor nach einem der Ansprüche 3 bis 8, **dadurch gekennzeichnet, daß** das erste, zweite, dritte und vierte Register (40, 11, 11 und 12) eine variable Größe haben.

10. Koprozessor nach einem der Ansprüche 3 bis 9, **dadurch gekennzeichnet, daß** das erste, zweite, dritte und vierte Registers (40, 10, 11 und 12) eine Größe von n Bits haben.

11. Koprozessor nach einem der Ansprüche 3 bis 10, **dadurch gekennzeichnet, daß** der Testschaltkreis ein Speicherelement für das Abspeichern eines Überlaufs von dem zweiten Subtraktionsschaltkreis (29) umfaßt und **daß** der Ausgang des Testschaltkreises (35) einen Datenwert ausgibt, der einem Komplement dieses Überlaufs entspricht.

12. Koprozessor nach einem der Ansprüche 3 bis 11, **dadurch gekennzeichnet, daß** der Divisionsrest in dem dritten Register (11) enthalten ist.

## Claims

1. A method for whole number division of a first number coded on n' - n" bits, by a second number coded on n bits, using a modular arithmetical coprocessor adapted to perform calculations by the Montgomery method, and comprising:
- a first, a second, a third and a fourth shift register (40, 10, 11 and 12) of n bits,
- a first and a second serial subtraction circuit (28 and 29),
- a test circuit (35),
**characterised in that** the said method includes the following steps:
E1: entering the first number in the first and second registers (40 and 10), initialising the third register (11) with zeroes, entering the second number in the fourth register (12), initialising the test circuit (35) and subtraction circuits (28 and 29) at zero,
E2: shifting the third and fourth registers (11 and 12) by one bit, the third register (11) capturing as a heavyweight bit the heavyweight bit from the second register (10), the fourth register (12) having its output connected to its input, subtracting, in the second subtraction circuit (29), the heavyweight bit from the second register (10) with the lightweight bit from the fourth register (12), the first subtraction circuit (28) performing a subtraction of the lightweight bit of the third register (11) with zero,
E3: shifting the third and fourth registers (11 and 12) by n - 1 bits, the output of the fourth register (12) being connected to its input, the input of the third register (11) being connected to the output of the first subtraction circuit (28), subtracting the n - 1 bits leaving the third register (11) with zero in the first subtraction circuit (28), subtracting the output of the results leaving the first subtraction circuit (28) with the bits from the fourth register (12),
E4: memorising the last entry held in the second subtraction circuit (29) in the test circuit (35), and producing at the output of the said test circuit (35) a binary data item the value of which is the complement of the memorised retained entry,
E5: shifting by one bit in the first and second registers (40 and 10), the heavyweight bit from the first register (40) being loaded as lightweight bit of the second register (10), the binary data item memorised in the test circuit (35) being loaded as lightweight bit in the first register (40),
E6: initialising the first and second subtraction circuits (28 and 29),
E7: repeating steps E2 to E6 2 * n - 1 times, the first subtraction circuit (28) performing a subtraction of the contents of the third register (11) with zero if the retained item memorised beforehand is equal to 1, the first subtraction circuit (28) performing a subtraction of the content of the third register (11) with the content of the fourth register (12) if the retained item memorised beforehand is equal to zero.

2. A method according to Claim 1, **characterised in that** some steps are carried out during other steps.

3. A modular arithmetical coprocessor for carrying out calculations according to the Montgomery method, comprising a division circuit adapted to carry out the method of division according to Claim 1, the division circuit including a test circuit (35) having an input and an output for carrying out whole number divisions by different numbers to a power of two, **characterised in that** the whole number division circuit calculates the division of a binary data item A coded on n' - n" bits by a binary data item B coded on n bits, where A, B, n, n' and n" are non-zero whole numbers,
and **in that** the whole number division circuit comprises:
- a first register (40) of n' bits and a second register (10) of n" bits for containing the binary data item A and the result of the division,
- a third register (11) of n bits for containing an intermediate result,
- a fourth register (12) of n bits for containing the binary data item B,
- two subtraction circuits (28 and 29) in cascade, each of which has a first and a second serial input and a serial output.

4. A coprocessor according to Claim 3, **characterised in that** the first, second, third and fourth registers (40, 10, 11 and 12) are shift registers, each having a serial input and a serial output.

5. A coprocessor according to Claim 4, **characterised in that**:
- the output of the third register (11) is connected to the first input of the first subtraction circuit (28),
- the output of the fourth register (12) is connected to the second input of the second subtraction circuit (29),
- the output of the second subtraction circuit (29) is connected to the input of the test circuit (35),
- the output of the first register (40) is connected to the input of the second register (10),
- the output of the second register (10) is connected to the input of the third register (11),
- the output of the second register (10) is connected to the first input of the second subtraction circuit (29),
- the output of the first subtraction circuit (28) is connected to the input of the fourth register (11),
- the output of the fourth register (12) is connected to its input,
- the output of the fourth register (12) is connected to the second input of the first subtraction circuit (28),
- the output of the first subtraction circuit (28) is connected to the first input of the second subtraction circuit (29),
- the output of the test circuit (35) is connected to the input of the first register (40).

6. A coprocessor according to Claim 4 or Claim 5, **characterised in that**:
- the second input of the first subtraction circuit (28) is connected to a logic zero,
- the input of the first register (40) is connected to a first input terminal,
- the input of the second register (10) is connected to a second input terminal,
- the input of the third register (11) is connected to a logic zero,
- the input of the fourth register (12) is connected to a third input terminal.

7. A coprocessor according to Claim 5 or Claim 6, **characterised in that**:
- the input of the first register (40) is connected to an output of a first multiplexer (41),
- the input of the second register (10) is connected to an output of a second multiplexer (13),
- the input of the third register (11) is connected to an output of a third multiplexer (14),
- the input of the fourth register (12) is connected to an output of a fourth multiplexer (15),
- the second input of the first subtraction circuit (28) is connected to an output of a fifth multiplexer (37),
- the first input of the second subtraction circuit (29) is connected to an output of a sixth multiplexer (42),
- a selection input of the fifth multiplexer (37) is connected to the output of the test circuit (35),
and **in that** the said multiplexers (13, 14, 15, 37, 41 and 42) ensure some of the connections.

8. A coprocessor according to one of Claims 3 to 7, **characterised in that** the cells of the first and second registers (40 and 10) are placed close to the output of the said first and second registers (40 and 10), and **in that** the cells of the third and fourth registers (11 and 12), which are placed close to the input of the said third and fourth registers (11 and 12), receive the bits of greatest weight in the data that are contained therein.

9. A coprocessor according to one of Claims 3 to 8, **characterised in that** the first, second, third and fourth registers (40, 10, 11 and 12) are of variable sizes.

10. A coprocessor according to one of Claims 3 to 9, **characterised in that** the first, second, third and fourth registers (40, 10, 11 and 12) have an identical size of n bits.

11. A coprocessor according to one of Claims 3 to 10, **characterised in that** the test circuit (35) includes a memorising element adapted to memorise a retained data item issued from the second subtraction circuit (29), and **in that** the output of the test circuit (35) supplies a data item corresponding to a complement of the said retained item.

12. A coprocessor according to one of Claims 3 to 11, **characterised in that** the remainder of the division is contained in the third register (11).
